# EUROPÄISCHE PATENTSCHRIFT

(11) **EP 2 409 385 B1**
(45) Veröffentlichungstag und Bekanntmachung des Hinweises auf die Patenterteilung: **02.03.2016**
(21) Anmeldenummer: 10708123.4
(22) Anmeldetag: 04.03.2010
(51) Int. Cl.: H02K 5/22, H02K 5/136

(54) **EXPLOSIONSGESCHÜTZTER ELEKTRISCHER MOTOR**
EXPLOSION-PROTECTED ELECTRIC MOTOR
MOTEUR ÉLECTRIQUE ANTIDÉFLAGRANT

(30) Priorität: 16.03.2009 DE 102009013049
(43) Veröffentlichungstag der Anmeldung: 25.01.2012
(73) Patentinhaber: SEW-EURODRIVE GmbH & Co. KG, 76646 Bruchsal (DE)
(72) Erfinder: PFANN, Jochen, 76189 Karlsruhe (DE); DOMBECK, Michael, 75053 Gondelsheim (DE)
(86) Internationale Anmeldenummer: PCT/EP2010/001354
(87) Internationale Veröffentlichungsnummer: WO 2010/105742

(56) Entgegenhaltungen:
- DE-A1- 2 200 169
- DE-A1- 2 313 378
- DE-A1- 19 527 879
- GB-A- 917 051
- GREINER H: "PROTEZIONE ANTIACCENSIONE PER MOTORI TRIFASE ANTIDEFLAGRANTI", ORGANI DI TRASMISSIONE, TECNICHE NUOVE. MILANO, IT, Bd. 29, Nr. 6, 1. Juni 1998 (1998-06-01), Seiten 114-122, XP000755345, ISSN: 0030-4905
- HORST-GÜNTER HALT: "EXPLOSIONSGESCHUETZTE ELEKTROMOTOREN FUER FREILUFTAUFSTELLUNG", 19680911, Nr. 50, 11. September 1968 (1968-09-11), Seiten 267-268, XP001447673,

## Beschreibung

Die Erfindung betrifft einen explosionsgeschützten elektrischen Motor.

Aus der EP 1 981 151 ist eine drehende Maschine mit explosionsgeschütztem Gehäuse bekannt.

**Aus der Veröffentlichung** GREINER, H. "PROTECCIONE ANTIACCENSIONE PER MOTORI TRIFASE ANTIDEFLAGRANTI" ORGANI DI TRANSMISSIONE, TECNICHE NUOVE, MILANO, IT, Bd. 29, Nr. 6, 1. Juni 1998, Seiten 114 - 22, ISSN: 0030-4905 **ist ein explosionsgerschützter Motor bekannt.**

**Aus der** DE 195 27 879 A1 **ist ein Antriebsmotor für eine Fasspumpe bekannt.**

Der Erfindung liegt daher die Aufgabe zugrunde, einen explosionsgeschützten, elektrischen Motor bzw. ein Gehäuse weiterzubilden.

Erfindungsgemäß wird die Aufgabe bei dem explosionsgeschützten, elektrischen Motor mit den in Anspruch 1 angegebenen Merkmalen und beim dem Gehäuse mit den In Anspruch 2 angegebenen Merkmalen gelöst.

Wichtige Merkmale der Erfindung bei dem elektrischen Motor sind, dass der explosionsgeschützte elektrische Motor eine in einem Gehäuse gelagerten Welle umfasst, welche durch eine abtriebsseitige Wellendurchführung des Gehäuses hindurchgeführt ist und die abtriebsseitige Wellendurchführung zwischen Welle und Gehäuse einen zünddurchschlagsicher ausgebildeten Spalt aufweist, wobei das Gehäuse topfartig mit einem Boden und einem Deckel ausgebildet ist und ein Anschlusskastenaufsatz zur Kabeldurchführung einer Statorwicklung an dem deckelseitigen Endbereich des topfartigen Gehäuses angeformt ist. Von Vorteil Ist dabei, dass weniger Spalte nötig sind und das Gehäuse stabiler ist, als bei einem herkömmlichen Motor mit zwei Lagerschilden. Gleichzeitig lassen sich die Kabel zum Anschluss der Statorwicklung einfach montieren.

Bei einer vorteilhaften Ausgestaltung ist ein abtriebsseitiges Lager auf einer Gehäuseaußenseite des Bodens angeordnet. Von Vorteil ist dabei, dass das Lager einfach einbaubar ist.

Bei einer weiteren vorteilhaften Ausgestaltung lagert ein Loslager die Welle in dem als Lagerschild ausgeführten Deckel. Von Vorteil ist dabei, dass die Welle sicher gelagert ist.

Bei einer weiteren vorteilhaften Ausgestaltung ist zwischen dem Deckel und einem topfartiger Rest des Gehäuses ein zünddurchschlagsicherer Gehäusespalt gebildet. Von Vorteil ist dabei, dass das Gehäuse explosionsgeschützt ist, ohne das eine Umgebung des Motors gefährdet ist, bzw. eine Explosion im Gehäuse des Motors gefangen bleibt und nicht nach Außen durchschlägt.

Bei einer weiteren vorteilhaften Ausgestaltung weist der Boden eine Ausstülpung auf, welche insbesondere zylindrisch ausgeführt ist, in welcher eine Lageraufnahme zur Gehäuseaußenseite und ein die Welle umgebender Abschnitt ausgebildet ist, welcher den zünddurchschlagsicher ausgebildeten Spalt bildet. Von Vorteil ist dabei, dass das Gehäuse druckfester ist.

Bei einer weiteren vorteilhaften Ausgestaltung ist auf der Ausstülpung des Bodens ein Flansch aufgeschoben, welcher mittels einer Schraube am Gehäuse befestigt ist, wobei die Schraube insbesondere in sacklochförmige, in axialer Richtung im Boden ausgeführte Gewindebohrungen eingeschraubt ist. Von Vorteil ist dabei, dass verschiedene Flansche am Motor befestigbar sind. Somit sind verschiedene Getriebe am Motor anbaubar, ohne dass das Druckfestgekapselte Motorengehäuse geöffnet werden müsste.

Bei einer weiteren vorteilhaften Ausgestaltung weist der Boden des Gehäuses die abtriebsseitige Wellendurchführung auf. Von Vorteil ist dabei, dass ein radial stärker belastetes Festlager in einem stabileren Bereich des Gehäuses eingebaut ist.

Bei einer weiteren vorteilhaften Ausgestaltung ist auf dem Anschlusskastenaufsatz ein druckfester Anschlusskasten aufgesetzt, wobei zwischen Anschlusskasten und Anschlusskastenaufsatz ein weiterer zünddurchschlagsicherer Spalt ausgebildete ist. Von Vorteil ist dabei, dass das Gehäuse und der Anschlusskasten explosionsgeschützt und druckfest ausgeführt sind.

Bei einer weiteren vorteilhaften Ausgestaltung weist der Anschlusskastenaufsatz eine zylindrische Öffnung auf, deren Achse annähernd senkrecht bis senkrecht zu einer Wellenachse verläuft, ein zylinderförmigen elastischen Grundkörper mit parallel zu einer Zylinderachse geführten Durchgangslöchern passgenau in die zylindrische Öffnung eingelegt ist, der zylinderförmige elastische Grundkörper an seinen kreisförmigen Endseiten durch eine den Durchgangslöchern entsprechende Löcher aufweisende motorseitige und eine gegenüberliegende Platte begrenzt ist, wobei die motorseitige Platte sich auf einer Schulter im Klemmenkastenaufsatz abstützt und die gegenüberliegende Platte durch ein Ringelement mit einem Außengewinde, welches in ein Innengewindeabschnitt der zylindrischen Öffnung eingreift, auf den zylinderförmigen elastischen Grundkörper gedrückt ist. Von Vorteil ist dabei, dass der Anschlusskasten und das Gehäuse zwei getrennte Raumbereiche bilden, welche jeder für sich explosionsgeschützt ausführbar sind, und trotzdem notwendige Anschlusskabel, wie zum Beispiel für eine Statorwicklung, eine Bremse oder Sensoren, vom Anschlusskasten in das Gehäuse führbar sind.

Bei einer weiteren vorteilhaften Ausgestaltung ist im Deckel eine Lageraufnahme für ein Loslager angeordnet. Von Vorteil ist dabei, dass die Welle sicher gelagert ist.

Bei einer weiteren vorteilhaften Ausgestaltung weist der Deckel eine weitere Wellendurchführung auf, wobei ein Wellenstumpf über den Deckel hervorsteht und zwischen Welle und Deckel ein zusätzlicher zünddurchschlagsicherer Spalt ausgebildete ist. Von Vorteil ist dabei, dass zusätzliche Elemente, wie eine Drehzahlmessvorrichtung oder ein Lüfterrad oder eine Bremse an der Welle befestigbar sind.

Bei einer weiteren vorteilhaften Ausgestaltung ist auf dem Wellenstumpf ein Lüfterrad drehfest angeordnet. Von Vorteil ist dabei, dass die Wärme des Elektromotors besser abführbar ist.

Bei einer weiteren vorteilhaften Ausgestaltung ist an dem Wellenstumpf eine Drehzahlmessvorrichtung drehfest angeordnet. Von Vorteil ist dabei, dass die Drehzahl des Elektromotors überwacht ist.

Bei einer weiteren vorteilhaften Ausgestaltung ist an dem Deckel eine gehäusebildende Abdeckvorrichtung angebracht, welche insbesondere Ausnehmungen zum Ansaugen von Luft aufweist. Von Vorteil ist dabei, dass die zusätzlichen Anbauteile wie Bremse, Lüfterrad und Drehzahlmessvorrichtung geschützt sind.

Wichtige Merkmale bei dem explosionsgeschützten, druckfesten Gehäuse sind, dass das explosionsgeschützte, druckfeste Gehäuse zwei Raumbereiche aufweist, wobei die zwei Raumbereiche nach außerhalb des Gehäuses hin je mindestens einen zünddurchschlagsicher ausgebildeten Spalt aufweisen, wobei eine druckfeste Quetschdichtung zwischen beiden Raumbereichen angeordnet ist, wobei vorzugsweise elektrische Leitungen durch die Quetschdichtung hindurchgeführt sind. Die Quetschdichtung quetscht die elektrischen Leitungen und fixiert die elektrischen Leitungen dichtend. Von Vorteil ist dabei, dass zwei Raumbereiche getrennt explosionsgeschützt und druckfest sind und somit die Sicherheit erhöht ist. Gleichzeitig sind eventuelle elektrische Leitungen zuggesichert und abgedichtet von einem Raumbereich zu einem weiteren Raumbereich geführt.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Ausführungsbeispielen mit Bezugnahme auf die Zeichnung näher erläutert. Es zeigen rein schematisch:
- Figur 1: einen Schnitt durch ein Ausführungsbeispiel des erfindungsgemäßen explosionsgeschützten Motors;
- Figur 2: einen Schnitt durch ein weiteres Ausführungsbeispiel des erfindungsgemäßen explosionsgeschützten Motors; und
- Figur 3: eine Frontansicht des in Figur 2 gezeigten weiteren Ausführungsbeispiels.

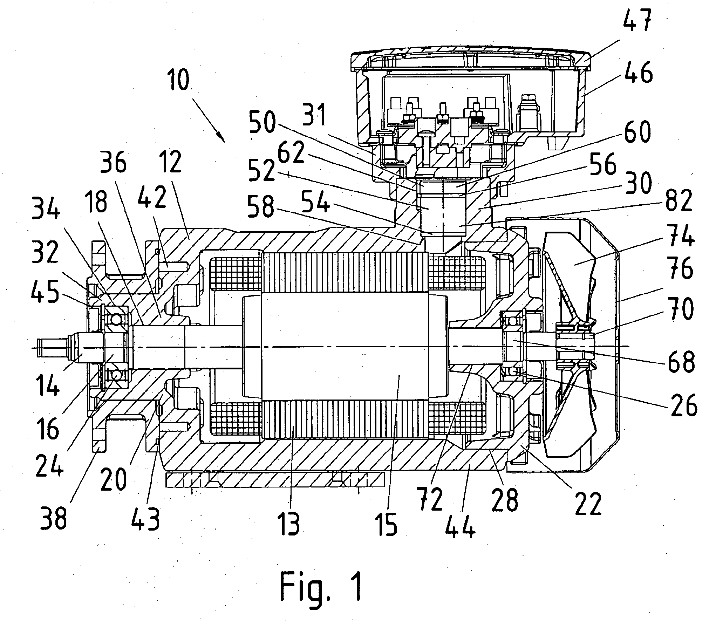

Figur 1 zeigt einen erfindungsgemäßen explosionsgeschützten Motor 10 in sogenannter Ausführung mit erhöhter Sicherheit. Ein druckfestes Gehäuse 12 ist mit einem Anschlusskasten 46 kombiniert.

Das Gehäuse 12 ist topfartig mit Deckel 22 ausgeführt. Der Deckel 22 ist als lüfterseitiges Lagerschild ausgebildet und umfasst eine weitere Lageraufnahme 64 für ein Loslager 26. Im Boden 20 des Gehäuses 12 ist zu einer Gehäuseaußenseite hin eine Lageraufnahme 34 für ein abtriebsseitige Lager 24 in einer Ausstülpung 32 ausgeformt. Der Deckel 22 ragt an seinem umlaufenden Randbereich in das Gehäuse 12 hinein. Zwischen Gehäuse 12 und Deckel 22 ist ein zünddurchschlagsicherer Gehäusespalt 28 ausgebildet.

Das abtriebsseitige Lager 24 als Festlager und das Loslager 26 lagern eine Welle 14 im Gehäuse 12. Das abtriebsseitige Lager 24 ist im Boden 20 besser gehalten als in einem sonst üblichen Lagerschild. Durch das Anordnen des abtriebsseitigen Lagers 24 in der Gehäuseaußenseite ergibt sich ein vorteilhafter Knickpunkt der Welle 14. Weiter werden radiale Kräfte, welche auf die Welle einwirken, besser aufgenommen.

Eine abtriebsseitige Wellendurchführung 16 im Boden 20 bildet durch einen die Welle 14 umgebenden Abschnitt 36 des Bodens 20 zwischen Gehäuse 12 und Welle 14 einen zünddurchschlagsicher ausgebildeten Spalt 18. Der die Welle 14 umgebende Abschnitt 36 ragt in das Gehäuse 12 hinein. Auf der Welle 14 ist ein Rotor 15 aufgepresst, welcher mit einem Stator 13 zusammenwirkt. Der Stator 13 ist im Gehäuse 12 befestigt.

In den Boden 20 sind sacklochförmige Gewindebohrungen 42 von außerhalb des Gehäuses 12 eingebracht. Auf die Ausstülpung 32 ist ein Flansch 38 aufgeschoben. Die Ausstülpung 32 ist aus fertigungstechnischer Sicht vorteilhafterweise zylinderförmig. Eine quaderförmige oder anderweitige eckig ausgeführte Ausstülpung ist vorteilhaft zur Aufnahme von Drehmomenten.

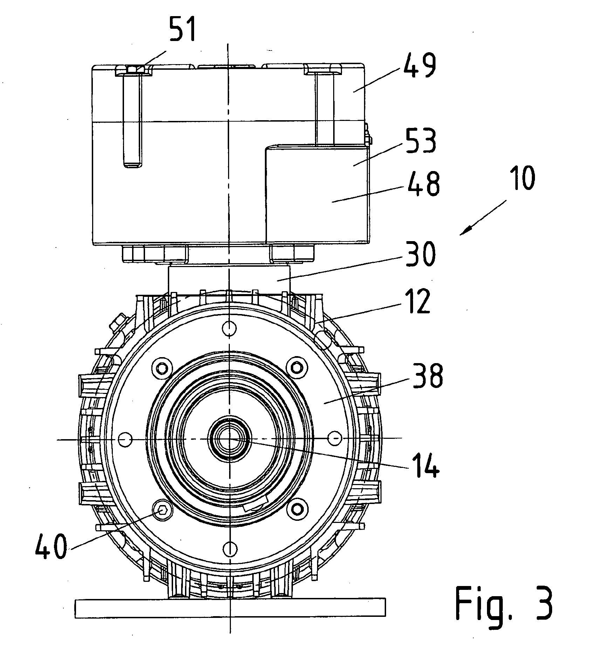

Der Flansch 38 weist in Umfangsrichtung einen U-förmigen Querschnitt auf. Ein Schenkel des Us liegt am Boden 20 an und drückt einen O-Ring 43 gegen den Boden 20. Wie in Figur 3 gezeigt, wirkt eine Schraube 40 mit einer kreisförmigen Ausnehmung in dem Schenkel zusammen und ist in die Gewindebohrung 42 eingeschraubt. In einem zweiten Schenkel sind zu der kreisförmigen Ausnehmung passende Öffnungen eingebracht, um die Schraube einfach festzuschrauben.

Der erfindungsgemäße Motor 10 ist nicht auf diese eine Form des Flansches 38 beschränkt. Dem Fachmann sind auch andere Flanschformen bekannt, welche entsprechend der erfindungsgemäßen Ausführungsform des Gehäuses 12 an die Ausstülpung 32 anpassbar sind.

An den Flansch 38 ist zum Beispiel ein Getriebe anschraubbar. Damit kein Getriebeöl in den Motor gelangt, ist ein Wellendichtring 45 in der nach außen fortgeführten Lageraufnahme 34 angeordnet. Ein durchsickern des Öles zwischen Flansch und Gehäuse in eine Umgebung des Motors verhindert der O-Ring 43.

An einem deckelseitigen Endbereich 44 des topfartigen Gehäuses 12 steht ein Anschlusskastenaufsatz 30 annähernd senkrecht bis senkrecht vom Gehäuse 12 ab. Der Anschlusskastenaufsatz 30 ist vorteilhafterweise einstückig mit dem Gehäuse 12 ausgeformt und weist eine Öffnung 50 auf.

Auf den Anschlusskastenaufsatz 30 ist in der in Figur 1 gezeigten Ausführungsform über ein Zwischenstück 31 ein Anschlusskasten 46 aufgesetzt. Im Anschlusskasten 46 sind nötige Anschlussmögllchkelten, insbesondere Klemmen, für von außerhalb des Anschlusskastens 46 zugeführte Leitungen angeordnet. Die von außerhalb zugeführten Leitungen werden durch allgemein bekannte Durchführungen in Wänden des Anschlusskastens 46 geführt. Der Anschlusskasten 46 weist einen Anschlusskastendeckel 47 auf, welcher mit weiteren Schrauben an einem Gehäuseteil des Anschlusskastens 46 befestigt ist. Der Anschlusskasten 46 selbst ist mit zusätzlichen Schrauben am Zwischenstück 31 befestigt, welches wiederum am Anschlusskastenaufsatz 30 aufgeschraubt ist. Dazu weist der Anschlusskastenaufsatz 30 an einem freistehenden Endbereich ein Außengewinde auf, mit welchem ein Innengewinde des Zwischenstücks 31 zusammenwirkt.

Bei einem nicht gezeigten Ausführungsbeispiel weist der veränderte Anschlusskastenaufsatz einen eckigen Umfang auf. Dann ist ein verändertes Zwischenstück an dem Gehäuse festgeschraubt oder in sonstiger bekannter Weise befestigt, wie zum Beispiel geklebt, geschweißt, genietet oder mittels eines Bajonettverschlusses.

Die Öffnung 50 verbindet einen Innenraum des Anschlusskasten 46 mit einem Innenraum des Gehäuses 12 in dem der Stator 13 angeordnet ist. Durch die Öffnung 50 werden zum Beispiel die Anschlusskabel für eine Statorwicklung des Stators 13 geführt. Für einen druckfesten Verschluss der Öffnung 50 ist in der Öffnung 50 eine Quetschdichtung 82 angeordnet. Eine Achse der Öffnung 50 steht senkrecht auf einer Achse der Welle 14.

Die Quetschdichtung 82 umfasst einen elastischen Körper 52 welcher zumindest teilweise annähernd formschlüssig bis formschlüssig in der Öffnung 50 angeordnet ist. Eine motorseitige Platte 54 stütz sich zum Innenraum des Gehäuses 12 hin auf einer Schulter in der Öffnung 50 ab. Der elastische Körper 52 liegt mit einer Stirnseite auf der motorseitigen Platte 54 an und ist auf seiner gegenüberliegenden Stirnseite von einer gegenüberliegenden Platte 56 begrenzt.

Die Quetschdichtung 82 und die Öffnung 50 sind vorteilhafterweise zylindrisch ausgeformt.

Die gegenüberliegende Platte 56 ist von einem Drückelement insbesondere einem Ringelement 60 mit einem Außengewinde in Richtung Innenraum des Gehäuses 12 auf den elastischen Körper 52 drückbar. Dazu greift das Ringelement 60 in ein Innengewinde in einem Innengewindeabschnitt 62 des Anschlusskastenaufsatzes 30 ein. Durch eindrehen des Ringelementes 60 wird der elastische Körper 52 zwischen der motorseitigen Platte 54 und der gegenüberliegenden Platte 56 eingequetscht. Die gegenüberliegende Platte 56 drückt den elastischen Körper 52 in die Öffnung 50 und insbesondere gegen eine Innenwand des Anschlusskastenaufsatzes 30. Dadurch ist die Öffnung 50 druckfest verschlossen.

Die Quetschdichtung 82 und somit der elastische Körper 52, die motorseitige Platte 54 und die gegenüberliegende Platte 56 weisen Löcher zur Durchführung von Leitungen, insbesondere den Anschlusskabeln für die Statorwicklung auf. Diese Löcher sind bei einer gequetschten Quetschdichtung 82 gegen die Leitungen gedrückt. Somit werden die Leitungen festgehalten und die Löcher druckfest abgedichtet.

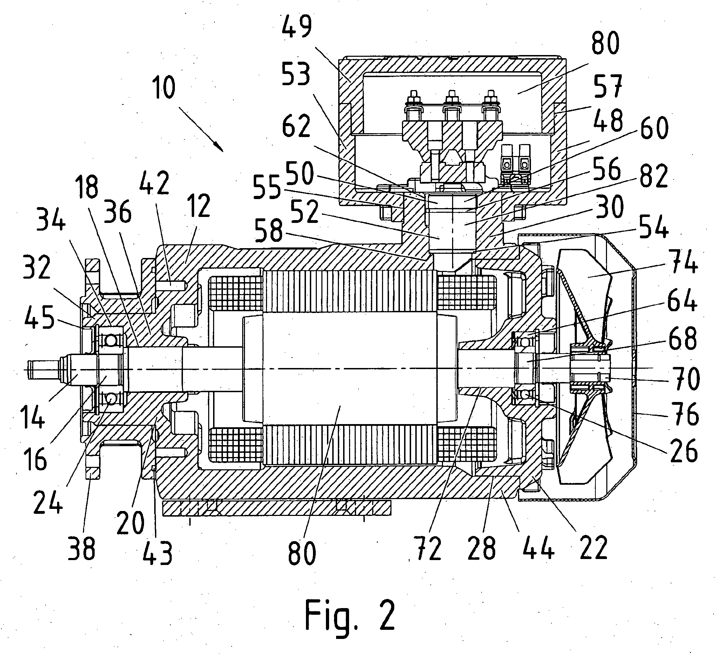

In den in Figur 1 und 2 gezeigten Ausführungsformen ist die Welle 14 durch eine weitere Wellendurchführung 68 durch den Deckel 22 geführt. Ein Wellenstumpf 70 ragt aus dem Deckel 22 ungefähr mittig hervor.

Die weitere Wellendurchführung 68 ist ähnlich der Wellendurchführung 16 ausgeführt. Ein in das Gehäuse hineinragender Teilbereich des Deckels 20 bildet zusammen mit der Welle 14 einen zusätzlichen zünddurchschlagsicheren Spalt 72. Dafür bildet der Teilbereich eine die Welle umschließende Zylindermantelfläche.

Auf dem Wellenstumpf 70 ist ein Lüfterrad 74 drehfest angeordnet. Das Lüfterrad 74 und der Wellenstumpf 70 sind durch eine Abdeckvorrichtung 76 gehäusebildend umgeben. In einer parallel zum Deckel 22 geführten Wand der Abdeckvorrichtung 76 sind Ausnehmungen eingebracht, durch welche das Lüfterrad 74 in drehendem Zustand Luft ansaugt. Die Luft wird durch das Lüfterrad gegen einen Umlenkbereich der Abdeckvorrichtung 76 gelenkt und von dort weiter Richtung Gehäuse geleitet. So strömt die Luft an dem Gehäuse 12 vorbei und erhöht die thermische Ableitfähigkeit des Gehäuses 12 bei drehender Welle 14.

Ein freistehender Endbereich des Wellenstumpfes 70 weist eine Sacklochbohrung auf, in welcher zum Beispiel eine Drehmessvorrichtung befestigbar ist.

Das Ausführungsbeispiel in Figur 2 unterscheidet sich von dem Ausführungsbeispiel in Figur 1 durch einen druckfesten Anschlusskasten 48. Dadurch bilden das Gehäuse 12 mit dem Deckel 22 und der druckfeste Anschlusskasten 48 ein explosionsgeschütztes, druckfestes Gehäuse mit zwei Raumbereichen. Zwischen den Raumbereichen ist eine Durchführung, insbesondere als Öffnung 50 ausgeführt, vorhanden in welcher eine druckfeste Quetschdichtung 84 angeordnet ist. Die druckfeste Quetschdichtung 84 weist vorteilhafterweise einen elastischen Körper 52 auf, welcher gegen Innenwände der Durchführung quetschbar ist.

Die Quetschung lässt sich durch zusätzliche Elemente oder direkt durch das Anbringen des druckfesten Anschlusskastens 48 an das Gehäuse 12 durchführen. Zum Beispiel ist der druckfeste Anschlusskasten 48 so ausführbar, dass er beim Aufschrauben auf den Anschlusskastenaufsatz 30 den elastische Körper 52 quetscht.

Der druckfeste Anschlusskasten 48 ist direkt auf den Anschlusskastenaufsatz aufgeschraubt. Dafür gibt es verschieden Möglichkeiten. Zum einen ist der Anschlusskasten 48 mit einem Innengewinde versehen und der Anschlusskastenaufsatz 30 mit einem Außengewinde in welches das Innengewinde des Anschlusskastens 48 eingreift. In einem Gewindegang zwischen dem druckfesten Anschlusskasten 48 und dem Anschlusskastenaufsatz 30 ist so ein weiterer zünddurchschlagsicherer Spalt 55 gebildet. Zum anderen ist der Anschlusskasten mittels weiterer Schrauben, welche in Sacklochbohrungen mit Innengewinde der Stirnseite des Anschlusskastenaufsatzes 30 eingeschraubt sind befestigt. Dann greift der Anschlusskasten 48 vollumfänglich zumindest teilweise über den Anschlusskastenaufsatz 30 und bildet so eine zünddurchschlagsicheren Spalt zwischen einer Innenwand des Anschlusskastens und einer Außenwand des Anschlusskastenaufsatzes 30.

Der druckfeste Anschlusskasten 48 umfasst einen druckfesten Deckel 49, welcher mittels einer Deckelschraube an einem Anschlusskastenunterteil 53 befestigt ist. Zwischen dem druckfesten Deckel 49 und dem Anschlusskastenunterteil 53 ist ein zünddurchschlagsicherer Anschlusskastenspait 57 gebildet, indem der druckfeste Deckel 49 In Umfangsrichtung in das Anschlusskastenunterteil 53 zumindest teilweise hineinragt. Eine Außenfläche des druckfesten Deckels 49 schließt sich dabei stufenlos an eine Außenfläche des Anschlusskastenunterteils 53 an.

Im druckfesten Anschlusskasten 48 sind Anschlussvorrichtungen insbesondere Klemmen, angeordnet. Von außen in den druckfesten Anschlusskasten 48 zugeführte Leitungen sind durch bekannte druckfest Kabeldurchführungen in einer Anschlusskastenwand geführt.

Somit sind die zwei Raumbereich 80, 82 jeder für sich und gegeneinander druckfest ausgeführt.

### Bezugszeichenliste

- 10: Motor
- 12: Gehäuse
- 13: Stator
- 14: Welle
- 15: Rotor
- 16: abtriebsseitige Wellendurchführung
- 18: zünddurchschlagsicher ausgebildeter Spalt
- 20: Boden
- 22: Deckel
- 24: abtriebsseitiges Lager
- 26: Loslager
- 28: zünddurchschlagsicherer Gehäusespalt
- 30: Anschlusskastenaufsatz
- 32: Ausstülpung
- 34: Lageraufnahme
- 36: die Welle umgebender Abschnitt
- 38: Flansch
- 40: Schraube
- 42: Gewindebohrung
- 43: O-Ring
- 44: deckelseitiger Endbereich
- 45: Wellendichtring
- 46: Anschlusskasten
- 47: Anschlusskastendeckel
- 48: druckfester Anschlusskasten
- 49: druckfester Deckel
- 50: zylindrische Öffnung
- 51: Deckelschraube
- 52: zylinderförmiger elastischer Körper
- 53: Anschlusskastenunterteil
- 54: motorseitige Platte
- 55: weitere zünddurchschlagsicherer Spalt
- 56: gegenüberliegende Platte
- 57: zünddurchschlagsicherer Anschlusskastenspalt
- 58: Schulter
- 60: Ringelement
- 62: Innengewindeabschnitt
- 64: weitere Lageraufnahme
- 68: weitere Wellendurchführung
- 70: Wellenstumpf
- 72: zusätzlicher zünddurchschlagsicherer Spalt
- 74: Lüfterrad
- 76: Abdeckvorrichtung

- 80,82: Raumbereich
- 84: Quetschdichtung

## Patentansprüche

1. Explosionsgeschützter elektrischer Motor
mit einer in einem Gehäuse gelagerten Welle (14),
welche durch eine abtriebsseitige Wellendurchführung des Gehäuses (12) hindurchgeführt ist und
die abtriebsseitige Wellendurchführung (16) zwischen Welle (14) und Gehäuse (12) einen zünddurchschlagsicher ausgebildeten Spalt aufweist,
wobei das Gehäuse (12) topfartig mit einem Boden (20) und einem Deckel (22) ausgebildet ist und
ein Anschlusskastenaufsatz zur Kabeldurchführung einer Statorwicklung an dem deckelseitigen Endbereich des topfartigen Gehäuses (12) angeformt ist,
wobei ein abtriebsseitiges Lager auf einer Gehäuseaußenseite des Bodens (20) angeordnet ist,
wobei ein Loslager die Welle (14) in dem alls Lagerschild ausgeführten Deckel (22) lagert,
wobei der Boden (20) des Gehäuses (12) die abtriebsseitige Wellendurchführung (16) aufweist,
wobei im Deckel (22) eine weitere Lageraufnahme für das Loslager angeordnet Ist,
wobei der Boden (20) eine Ausstülpung, welche zylindrisch ausgeführt ist, aufweist, in welcher eine Lageraufnahme zur Gehäuseaußenseite hin und ein in das Gehäuse (12)
ragender, die Welle (14) umgebender Abschnitt ausgeformt sind, wobei der die Welle (14) umgebende Abschnitt mit der Welle (14) den zünddurchschlagsicher ausgebildeten Spalt bildet,
wobei auf der Ausstülpung ein Flansch aufgeschoben ist, welcher mittels einer Schraube am Gehäuse (12) befestigt ist, wobei die Schraube in eine sacklochförmige, in axialer Richtung im Boden (20) ausgeführte Gewindebohrung eingeschraubt ist,
wobei der Deckel (22) eine weitere Wellendurchführung (68) aufweist, wobei ein Wellenstumpf über den Deckel (22) hervorsteht und zwischen Welle (14) und Deckel (22) ein zusätzlicher zünddurchschlagsicherer Spalt ausgebildet ist,
wobei auf dem Wellenstumpf ein Lüfterrad drehfest angeordnet ist,
wobei an dem Wellenstumpf eine Drehzahlmessvorrichtung drehfest angeordnet ist,
wobei an dem Deckel (22) eine gehäusebildende Abdeckvorrichtung angebracht ist, welche Ausnehmungen zum Ansaugen von Luft aufweist,
wobei das explosionsgeschützte, druckfeste Gehäuse (12) des Motors zwei Raumbereiche aufweist,
wobei die zwei Raumbereiche nach außerhalb des Gehäuses (12) hin je einen zünddurchschlagsicher ausgebildeten Spalt aufweisen,
wobei eine druckfeste Quetschdichtung zwischen beiden Raumbereichen angeordnet ist,
wobei vorzugsweise elektrische Leitungen durch die Quetschdichtung hindurchgeführt sind,
wobei zwischen dem Deckel (22) und einem topfartiger Rest des Gehäuses (12) ein zünddurchschlagsicherer Gehäusespalt gebildet ist,
wobei auf dem Anschlusskastenaufsatz ein Anschlusskasten, vorzugsweise ein druckfester Anschlusskasten, aufgesetzt ist, wobei zwischen Anschlusskasten und Anschlusskastenaufsatz ein weiterer zünddurchschlagsicherer Spalt ausgebildete sind,
wobei der Anschlusskastenaufsatz eine zylindrische Öffnung aufweist, deren Achse annähernd senkrecht bis senkrecht zu einer Wellenachse verläuft,
ein zylinderförmiger elastischer Grundkörper mit parallel zu einer Zylinderachse geführten Durchgangslöchern passgenau in die zylindrische Öffnung eingelegt ist, der zylinderförmige elastische Grundkörper an seinen kreisförmigen Endseiten durch eine den Durchgangslöchern entsprechende Löcher aufweisende motorseitige und eine gegenüberliegende Platte begrenzt ist, wobei die motorseitige Platte sich auf einer Schulter im Anschlusskastenaufsatz abstützt und die gegenüberliegende Platte durch ein Ringelement mit einem Außengewinde, welches in ein Innengewindeabschnitt der zylindrischen Öffnung eingreift, auf den zylinderförmigen elastischen Grundkörper gedrückt ist.

2. Explosionsgeschütztes, druckfestes Gehäuse (12) für einen Motor nach Anspruch 1, welches zwei Raumbereiche aufweist,
wobei die zwei Raumbereiche nach außerhalb des Gehäuses (12) hin je einen zünddurchschlagsicher ausgebildeten Spalt aufweisen,
**dadurch gekennzeichnet dass**,
eine druckfeste Quetschdichtung zwischen beiden Raumbereichen angeordnet ist,
wobei vorzugsweise elektrische Leitungen durch die Quetschdichtung hindurchgeführt sind.

## Claims

1. Explosion-protected electric motor
having a shaft (14) mounted in a housing,
which shaft is led through an output-side shaft leadthrough of the housing (12) and
the output side leadthrough (16) has between shaft (14) and housing (12) a gap designed in an ignition transmission-resistant manner,
wherein the housing (12) is of pot-like form with a bottom (20) and a cover (22) and
a connection box attachment for the cable leadthrough of a stator winding is formed on the cover-side end region of the pot-like housing (12),
wherein an output-side bearing is arranged on a housing outer side of the bottom (20),
wherein a movable bearing supports the shaft (14) in the cover designed as an end shield,
wherein the bottom (20) of the housing (12) has the output-side shaft leadthrough (16),
wherein a further bearing receptacle for the movable bearing is arranged in the cover (22),
wherein the bottom (20) has a protuberance which is of cylindrical design, in which are formed a bearing receptacle towards the housing outer side and a section projecting into the housing (12) and surrounding the shaft (14), wherein the section surrounding the shaft (14) forms with the shaft (14) the gap designed in an ignition transmission-resistant manner,
wherein a flange is pushed onto the protuberance, which flange is fastened to the housing (12) by means of a screw, wherein the screw is screwed into a blind hole-shaped threaded bore designed in the axial direction in the bottom (20),
wherein the cover (22) has a further shaft leadthrough (68), wherein a shaft stub projects beyond the cover (22) and an additional ignition transmission-resistant gap is formed between shaft (14) and cover (22),
wherein a fan wheel is arranged in a rotationally fixed manner on the shaft stub,
wherein a rotational speed-measuring device is arranged in a rotationally fixed manner on the shaft stub,
wherein a housing-forming covering device is mounted on the cover (22), which device has apertures for sucking in air,
wherein the explosion-protected, pressure-resistant housing (12) of the motor has two spatial regions,
wherein the two spatial regions each have a gap, designed in an ignition transmission-resistant manner, towards the outside of the housing (12),
wherein a pressure-resistant compression seal is arranged between both spatial regions,
wherein preferably electrical lines are led through the compression seal,
wherein an ignition transmission-resistant housing gap is formed between the cover (22) and a pot-like rest of the housing (12),
wherein a connection box, preferably a pressure-resistant connection box, is mounted on the connection box attachment,
wherein a further ignition transmission-resistant gap are formed between connection box and connection box attachment,
wherein the connection box attachment has a cylindrical opening, the axis of which runs approximately perpendicularly to perpendicularly to a shaft axis,
a cylindrical elastic base body with through-holes running parallel to a cylinder axis is inserted with an exact fit into the cylindrical opening, the cylindrical elastic base body is delimited at its circular end sides by a motor-side and an opposite plate having holes corresponding to the through-holes, wherein the motor-side plate is supported on a shoulder in the connection box attachment and the opposite plate is pressed onto the cylindrical elastic base body by a ring element with an external thread which engages in an internally threaded portion of the cylindrical opening.

2. Explosion-protected, pressure-resistant housing (12) for a motor according to claim 1, which has two spatial regions, wherein the two spatial regions each have a gap, designed in an ignition transmission-resistant manner, towards the outside of the housing (12),
**characterised in that**
a pressure-resistant compression seal is arranged between both spatial regions,
wherein preferably electrical lines are led through the compression seal.

## Revendications

1. Moteur électrique antidéflagrant,
muni d'un arbre (14) qui est monté dans un carter
et franchit une traversée ménagée côté sortie dudit carter (12),
ladite traversée (16) ménagée côté sortie étant dotée, entre ledit arbre (14) et ledit carter (12), d'un interstice de conception résistant au claquage,
ledit carter (12) étant réalisé à la manière d'une marmite comprenant un fond (20) et un couvercle (22) et
un appendice, recevant une boîte de raccordement dévolue à la traversée du câblage d'un enroulement statorique, étant formé d'un seul tenant sur la région extrême située côté couvercle dudit carter (12) de type marmite,
sachant qu'un palier, situé côté sortie, est implanté sur une face extérieure du fond (20) dudit carter,
un palier libre assurant alors le montage de l'arbre (14) dans le couvercle (22) réalisé sous la forme d'un flasque,
le fond (20) dudit carter (12) présentant la traversée (16) de l'arbre, ménagée côté sortie, ledit couvercle (22) renfermant un logement de montage supplémentaire, dédié audit palier libre,
ledit fond (20) étant pourvu d'une excroissance de réalisation cylindrique, dans laquelle sont ménagés un logement de montage orienté vers la face extérieure du carter, et une région qui s'engage dans ledit carter (12) et entoure l'arbre (14), ladite région entourant l'arbre (14) formant alors, avec ledit arbre (14), l'interstice de conception résistant au claquage,
une bride, enfilée sur ladite excroissance, étant fixée audit carter (12) au moyen d'une vis, ladite vis étant vissée dans un perçage taraudé en forme de trou borgne, pratiqué dans ledit fond (20) dans la direction axiale,
le couvercle (22) étant muni d'une traversée supplémentaire (68) destinée à l'arbre, sachant qu'un bout d'arbre fait saillie au-delà dudit couvercle (22) et qu'un interstice additionnel, résistant au claquage, est réservé entre ledit arbre (14) et ledit couvercle (22),
une roue de ventilateur étant calée sur le bout d'arbre avec verrouillage en rotation,
un dispositif mesureur de vitesses angulaires étant installé sur ledit bout d'arbre, avec verrouillage en rotation,
sachant qu'un dispositif de recouvrement formant boîtier, implanté sur le couvercle (22), présente des évidements affectés à l'aspiration d'air,
le carter antidéflagrant (12) du moteur, tenant la pression, comprenant alors deux zones spatiales,
les deux zones spatiales étant pourvues, vers l'extérieur dudit carter (12), d'un interstice respectif de conception résistant au claquage,
une garniture d'étanchement compressible, tenant la pression, étant interposée entre les deux zones spatiales,
des conducteurs électriques étant, de préférence, guidés à travers ladite garniture d'étanchement compressible,
un interstice du carter, résistant au claquage, étant réservé entre le couvercle (22) et une région restante dudit carter (12) qui est réalisée à la manière d'une marmite,
sachant qu'une boîte de raccordement, de préférence une boîte de raccordement tenant la pression, est mise en place sur l'appendice de réception de ladite boîte, un interstice supplémentaire, résistant au claquage, étant alors réservé entre ladite boîte de raccordement et ledit appendice recevant ladite boîte,
l'appendice de réception de la boîte de raccordement comportant une ouverture cylindrique dont l'axe s'étend à peu près perpendiculairement, voire perpendiculairement à un axe de l'arbre,
un corps de base élastique et cylindrique, percé de trous de passage dont le tracé est parallèle à un axe cylindrique, étant inséré avec ajustement intime dans ladite ouverture cylindrique,
ledit corps de base élastique et cylindrique étant délimité, au niveau de ses faces extrêmes circulaires, par une platine située côté moteur et percée de trous correspondants auxdits trous de passage, et par une platine qui pointe à l'opposé, sachant que ladite platine située côté moteur est en appui sur un épaulement, dans l'appendice de réception de la boîte de raccordement, et que ladite platine pointant à l'opposé est pressée contre ledit corps de base, élastique et cylindrique, par l'intermédiaire d'un élément annulaire muni d'un filetage extérieur pénétrant dans une région à filetage intérieur de ladite ouverture cylindrique.

2. Carter antidéflagrant (12) tenant la pression, destiné à un moteur conforme à la revendication 1 et comprenant deux zones spatiales,
les deux zones spatiales étant pourvues, vers l'extérieur dudit carter (12), d'un interstice respectif de conception résistant au claquage,
**caractérisé par le fait**
**qu'**une garniture d'étanchement compressible, tenant la pression, est interposée entre les deux zones spatiales,
des conducteurs électriques étant, de préférence, guidés à travers ladite garniture d'étanchement compressible.
